(19) Europäisches Patentamt

European Patent Office

Office européen des brevets

(11) EP 0 251 387 B2

(12) **NOUVEAU FASCICULE DE BREVET EUROPEEN**

(45) Date de publication et mention de la décision concernant l'opposition:
**08.07.1998 Bulletin 1998/28**

(51) Int Cl.6: **G01S 13/34**

(45) Mention de la délivrance du brevet:
**18.05.1994 Bulletin 1994/20**

(21) Numéro de dépôt: **87201162.2**

(22) Date de dépôt: **17.06.1987**

(54) **Dispositif radar pour mesurer la distance qui le sépare d'une surface**

Radargerät zur Messung der Entfernung zu einer Oberfläche

Radar apparatus for measuring the distance to a surface

(84) Etats contractants désignés:
**DE FR GB**

(30) Priorité: **27.06.1986 FR 8609367**

(43) Date de publication de la demande:
**07.01.1988 Bulletin 1988/01**

(73) Titulaire: **THOMSON-CSF**
**75008 Paris (FR)**

(72) Inventeurs:
- **Crepin, Hugues Société Civile S.P.I.D.**
  **F-75007 Paris (FR)**
- **Hethuin, Serge Société Civile S.P.I.D.**
  **F-75007 Paris (FR)**

(74) Mandataire: **Courtellemont, Alain et al**
**THOMSON-CSF-S.C.P.I.,**
**13, Avenue du Président**
**Salvador Allende**
**94117 Arcueil Cédex (FR)**

(56) Documents cités:
EP-A- 0 149 939    FR-A- 2 552 905
FR-A- 2 574 280    GB-A- 2 083 312

- **THE RADIO AND ELECTRONIC ENGINEER, vol. 42, no. 7, juillet 1972, pages 344-348, Londres, GB; A. TONKIN et al.: "An application of correlation to radar systems"**
- **M.I. SKOLNIK: "INTRODUCTION TO RADAR SYSTEMS", 1962, pages 420-422, McGraw-Hill Book Co., Inc., New York, US**

EP 0 251 387 B2

## Description

La présente invention concerne un dispositif radar pour mesurer la distance "h" qui le sépare d'une surface, dispositif comportant des moyens d'émission pour émettre vers ladite surface une onde modulée en fréquence élaborée par un oscillateur muni d'une commande en fréquence, des moyens de réception pour recevoir cette onde réfléchie par ladite surface, un circuit mélangeur pour fournir une onde de battement entre l'onde émise et l'onde reçue et un circuit de traitement comportant un circuit de numérisation de l'onde de battement, un opérateur de transformation temporelle-fréquence pour fournir des composantes fréquentielles à partir desquelles est établie la distance "h", un opérateur d'autocorrélation pour effectuer une autocorrélation de l'onde de battement avant de l'appliquer aux moyens de transformation temporelle-fréquentielles.

Un tel dispositif radar trouve d'importantes applications notamment dans le domaine de la radionavigation où il peut être utilisé comme radioaltimètre. On pourra consulter aussi le brevet des Etats-Unis d'Amérique N° 4 568 938. Le brevet français 2 552 905 décrit un dispositif similaire, mais ce dispositif connu n'est pas très adapté à la mesure d'altitude ; le traitement qui y fait mention concerne le traitement d'une multitude de cibles se déplaçant à des vitesses différentes. Les composantes fréquentielles attachées à chaque cible forment un spectre étroit à partir duquel il est facile d'obtenir la distance.

Il en va différemment lorsque la cible est une surface étendue dont les différents points sont situés continûment à différentes distances du dispositif. Le spectre est alors large.

La demanderesse s'est rendue compte que, bien que l'altitude soit liée à la composante la plus basse, elle n'était pas facile à déterminer, soit que le bruit noie cette composante, soit que des phénomènes parasites faussent la valeur de cette composante. Ceci se manifeste surtout pour des distances "h" faibles et lorsqu'il y a déplacement relatif du dispositif radar et de la surface. On montrera dans la suite du présent exposé que le spectre de l'onde de battement est élargi par une fonction "sin x/x" où x est une variable dépendant de "h" et de la durée de la variation de fréquence de l'oscillateur. Il en découle que la composante fréquentielle la plus basse ne représente pas forcément la distance "h". De plus, le spectre de l'onde de battement peut être encore élargi par le phénomène de Doppler lorsqu'il y a un déplacement relatif entre le dispositif et la surface.

Pour améliorer la résistance au bruit il est connu d'utiliser la technique d'autocorrélation. On pourra à ce sujet consulter en plus l'ouvrage de M.I.SKOLKNIK : "Introduction to radar systems", 1962, pages 420-422, Mc Graw Hill Book Co., Inc., New York, US.

L'invention propose des moyens pour déterminer la fréquence de la composante donnant l'altitude.

Pour cela la présente invention a pour objet un dispositif radar, tel que décrit dans la revendication du présent document.

La description suivante, accompagnée des dessins annexés, le tout donné à titre d'exemple non limitatif, fera bien comprendre comment l'invention peut être réalisée.

La figure 1 représente le dispositif radar conforme à l'invention.

La figure 2 représente, en fonction du temps, l'allure de quelques signaux du dispositif de la figure 1.

La figure 3 représente l'allure de spectre des signaux de la figure 2.

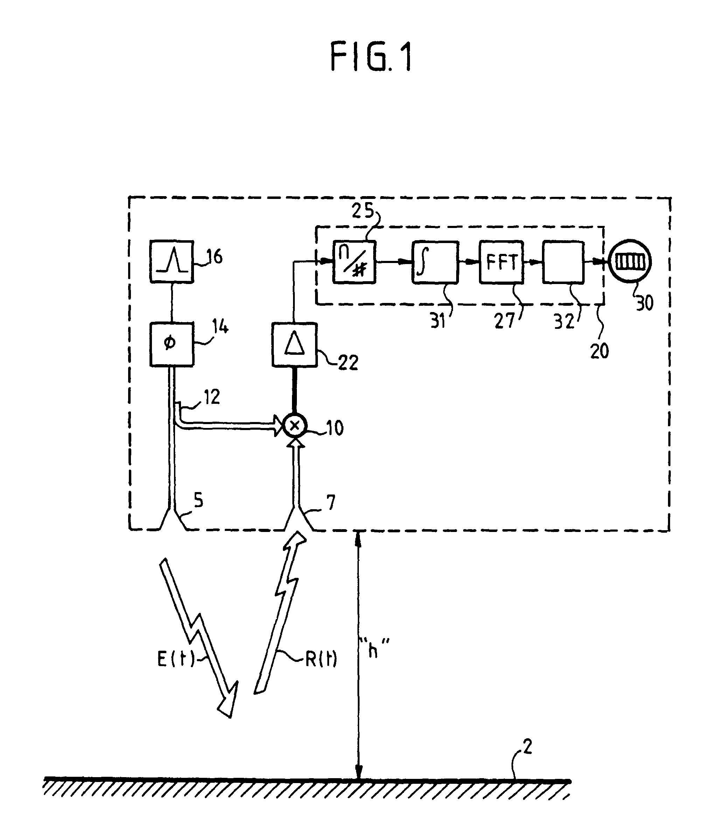

A la figure 1, la référence 1 indique le dispositif de l'invention destiné à mesurer la distance "h" qui le sépare d'une surface plane 2. Dans l'exemple décrit, on se place dans le cadre de la radionavigation où le dispositif 1 est à bord d'un aéronef tandis que la surface plane n'est autre que le sol et la distance "h" est donc l'altitude.

Le dispositif 1 comporte une antenne d'émission 5 à partir de laquelle est émise une onde E(t) vers le sol et une antenne de réception 7 pour capter l'onde réfléchie R(t) par le sol 2. Un circuit mélangeur 10 effectue le mélange de l'onde réfléchie avec une partie de l'onde émise prélevée au moyen d'un coupleur 12 connecté au niveau de l'entrée de l'antenne d'émission 5. L'onde émise est élaborée au moyen d'un oscillateur hyperfréquence 14 oscillant à partir d'une fréquence $f_0$ de l'ordre de 4 GHz. Sa fréquence est commandée par un générateur de signaux en dents de scie 16. Ainsi l'onde émise est modulée en fréquence sur une plage de fréquence $\Delta F$ et l'on peut écrire :

$$(1) \qquad E(t) = A \cos[2\pi(f_0 + \frac{\Delta E}{T} t)t]$$

pour t variant dans les laps de temps T où la dent de scie se produit.

A est une constante définissant l'amplitude de l'onde.

L'onde reçue R(t) après réflexion sur le sol (2) s'écrit :

$$R(t) = B \cos[2\pi(f_0 + \frac{\Delta E}{T} (t\text{-}\tau))t]$$

où B est une constante définissant le niveau reçu et $\tau$ représente le retard entre l'onde émise et l'onde réfléchie.

Le circuit mélangeur 10 a pour but de faire apparaître à sa sortie un signal :

$$(2) \qquad M(t) = C \cos[2\pi \frac{\Delta E}{T} \tau t]$$

où C représente une constante.

De la fréquence "fb" du signal M(t) on déduit la distance "h" :

$$fb = \tau \frac{\Delta E}{T} \text{ où } \tau = \frac{2h}{c}$$

(c = vitesse de la lumière)
d'où :

$$h = \frac{fb.c}{2\Delta F} T$$

Le circuit de traitement 20 effectue donc un traitement sur le signal de sortie du circuit mélangeur 10 après une amplification apportée par un amplificateur 22. Ce traitement est effectué sur des échantillons numériques obtenus par un convertisseur analogique-numérique 25. Une opération de transformation temporelle-fréquentielle, une transformation de Fourier par exemple, 27 est utilisée pour déterminer la fréquence "fb" afin que la distance "h" soit visualisée par un indicateur 30.

Conformément à l'invention, le circuit de traitement 20 comporte, en outre, un opérateur d'autocorrélation 31 pour effectuer une autocorrélation de l'onde de battement numérisée par le convertisseur analogique-numérique 25 avant de subir l'opération de transformation temporelle-fréquentielle exécutée par l'opérateur 27. De plus, le circuit 20 comporte des moyens de traitement de spectre 32 pour déterminer, à partir du spectre obtenu par ladite transformation temporelle-fréquentielle, la fréquence "fb" correspondant à la distance "h".

Le fonctionnement du dispositif de l'invention repose sur les considérations suivantes. Pour simplifier les explications, on se place dans le cas où la surface 2 se comporte comme une surface réfléchissante parfaite (réflexion spéculaire).

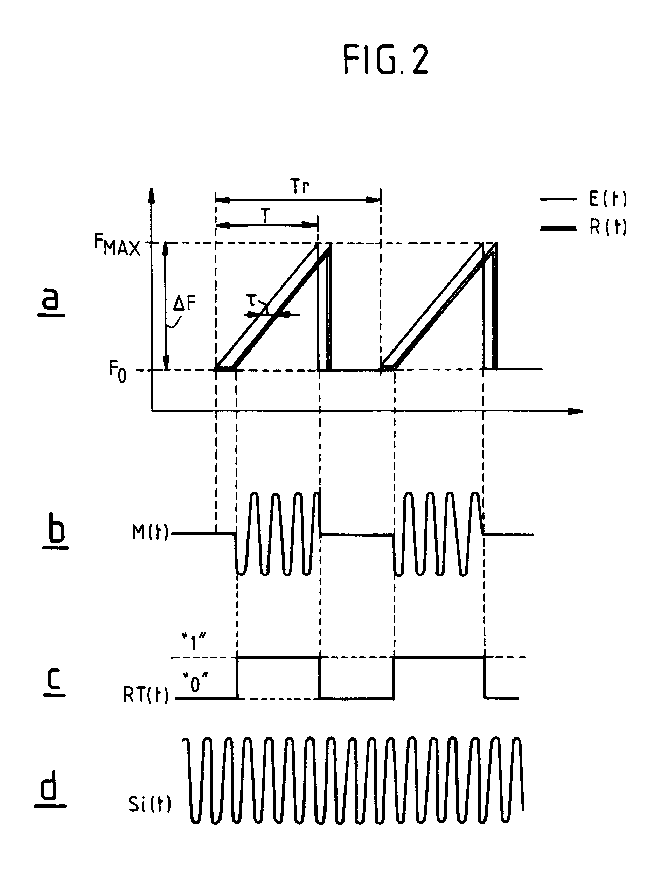

A la figure 2 en a on représente l'allure de la variation de fréquence de l'onde émise E(t) en trait simple et l'onde reçue R(t) en trait double. Ces fréquences varient linéairement en fréquence pendant un temps T et avec une période TR. Le signal de battement M(t) a donc l'allure représentée en b ; ce signal se présente donc sous la forme de trains de sinusoïdes. Ceci se décompose en un signal rectangulaire RT(t) montré en c et d'une sinusoïde Si(t) montrée en d (on a ici négligé les ruptures de phase).

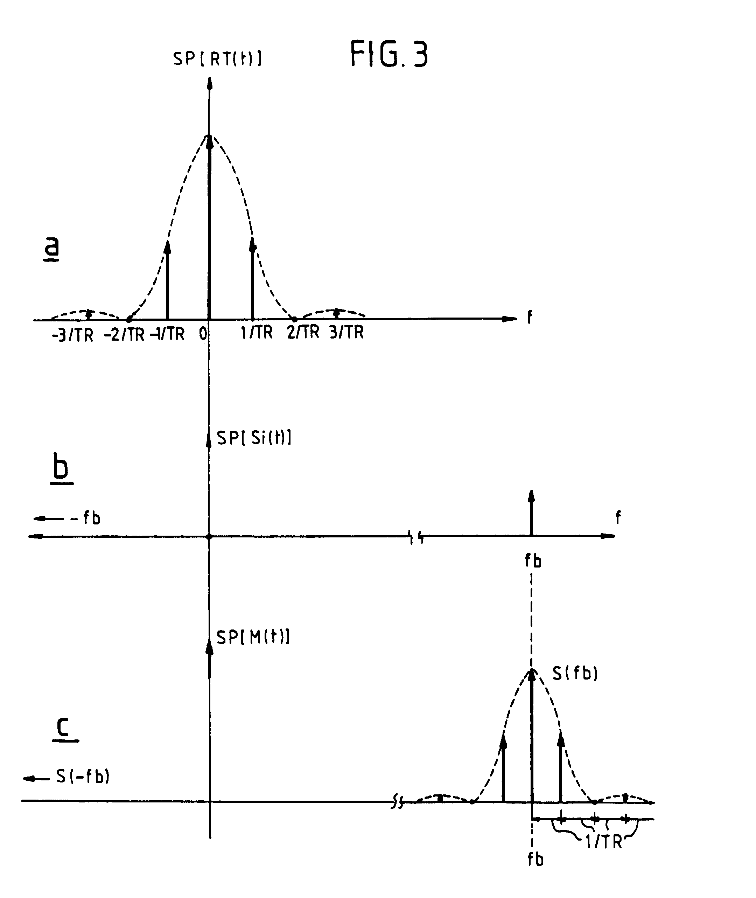

La figure 3 montre l'allure des différents spectres relatifs à ces signaux.

- en a on a représente le spectre SP[RT(t)] du signal rectangulaire. Ce signal étant périodique, son spectre est formé de raies discrètes espacées de 1/Tr. Les amplitudes de ces composants ont pour enveloppe la fonction $[\sin x/x]^2$.
- en b on a représenté le spectre SP[Si(t)] du signal Si(t) qui est formé de deux composantes aux fréquences "fb" et "-fb" ; seule la composante à "fb" est représentée.
- en c on a finalement le spectre du signal SP-[M(t)] de M(t) qui est donné par le produit de convolution des deux précédents spectres :

$$SP[M(t)] = SP[Si(t)] * SP[RT(t)]$$

c'est-à-dire que ce spectre est celui du signal RT(t) décalé de la fréquence fb.

On s'aperçoit donc que les composantes fréquentielles de fréquence les plus basses ne correspondent pas très exactement à la fréquence "fb".

Bien que jusqu'à présent on ait raisonné sur le spectre du signal à la sortie du mélangeur 10, le raisonnement s'applique aussi sur la fonction d'autocorrélation de ce même signal. Puisque le spectre d'un signal et le spectre de sa fonction d'autocorrélation ont des raies aux mêmes fréquences, l'opération d'autocorrélation permet que la transformation apportée par l'opérateur 27 s'effectue sur un signal qui possède un meilleur rapport signal/bruit et donc on obtient ainsi une meilleure précision.

Les moyens de traitement 32 de spectres traitent les différentes raies fournies par l'opérateur 27. Selon un mode de réalisation de l'invention, les moyens 27 déterminent le barycentre du spectre. Ainsi pour un spectre dont les composantes ont pour amplitude $c_n$ (n = k, k + 1, ..., k + m) s'étalant sur des fréquences $f_n$, la fréquence "fb" est déterminée par :

$$fb = \frac{\sum\limits_{n=k}^{k+m} c_n . f_n}{\sum\limits_{n=k}^{k+m} c_n}$$

Selon un deuxième mode de réalisation, les moyens 32 utilisent le procédé suivant :

- On détermine la valeur "i" qui donne le maximum en valeur absolue de $c_n - c_{n-1}$ c'est-à-dire : $c_i - c_{i-1}$.
- On détermine celle des composantes $c_i$ ou $c_{i-1}$, qui a la plus forte amplitude, d'où la fréquence fb : $fb = f_i$ ou $f_{i-1}$ selon que $C_i > C_{i-1}$ OU $C_{i-1} > C_i$.

Selon un troisième mode de réalisation, les moyens 27 utilisent le procédé suivant :

- On calcule $f^2_b$ selon la formule

$$f^2_b = \frac{\sum\limits_{n=k}^{k+m} c_n . f^2_m}{\sum\limits_{n=k}^{k+m} c_n}$$

- On détermine ensuite fb en calculant la racine carrée de la quantité précédente.

Ces autres modes de réalisation ne sont pas incompatibles avec le quatrième mode de réalisation qui consiste à prendre pour fb la valeur maximale des composants $c_n$.

On détermine alors la valeur n soit i qui est telle que ci soit maximal, d'où fb = $f_i$.

En pratique ces moyens de traitement de spectre 32 sont constitués avantageusement par un ensemble à microprocesseur ; il sera facile pour tout homme de l'art de programmer les procédés évoqués pour obtenir la valeur "fb".

## Revendications

1. Dispositif radar pour mesurer la distance "h" qui le sépare d'une surface, dispositif comportant des moyens d'émission (5) pour émettre vers ladite surface une onde modulée en fréquence élaborée par un oscillateur (14) muni d'une commande en fréquence, ladite onde émise E(t) étant modulée en fréquence sur une plage de fréquence $\Delta F$ de sorte que

$$E(t) = A \cos\left[2\pi\left(fo + \frac{\Delta F}{T} \cdot t\right) \cdot t\right]$$

des moyens de réception (7) pour recevoir cette onde réfléchie par ladite surface, un circuit mélangeur (10) pour fournir une onde de battement entre l'onde émise et l'onde reçue et un circuit de traitement (20) comportant un circuit de numérisation (25) de l'onde de battement, un opérateur de transformation temporelle-fréquentielle (27) pour fournir des composantes fréquentielles à partir desquelles est établie la distance "h", un opérateur d'autocorrélation (31) pour effectuer une autocorrélation de l'onde de battement avant de l'appliquer aux moyens de transformation temporelle-fréquentielles (27), caractérisé en ce que le circuit de traitement comporte aussi des moyens de traitement de spectre (32) pour déterminer la fréquence fb donnant la distance "h" à partir des valeurs d'une pluralité de composantes fréquentielles du spectre obtenu par l'opérateur de transformation temporelle-fréquentielle (27), où

$$fb = \tau \frac{\Delta F}{T} , \tau$$

représentant le retard entre l'onde émise et l'onde réfléchie et en ce que ces moyens de traitement opèrent selon une des façons suivantes :

a/ les moyens de traitement de spectre déterminent la fréquence "fb" fournissant la distance "h" :

$$fb = \frac{\displaystyle\sum_{n=k}^{k+m} c_n \cdot f_n}{\displaystyle\sum_{n=k}^{k+m} c_n}$$

où $c_n$ sont les valeurs d'amplitude du spectre fourni par l'opérateur de transformation temporelle-fréquentielle et $f_n$ les valeurs de fréquence relatives à ces amplitudes (n entier variant de k à k+m),

b/ les moyens de traitement de spectre opèrent sur les valeurs d'amplitude $c_n$ pour des fréquences $f_n$, selon le procédé suivant :

- on détermine la valeur "i" qui donne le maximum en valeur absolue de $c_n - c_{n-1}$ c'est-à-dire : $c_i - c_{i-1}$.
- on détermine celle des composantes $c_i$ ou $c_{i-1}$ qui a la plus forte amplitude, d'où la fréquence fb : $fb = f_i$ ou $f_{i-1}$ selon que $c_i > c_{i-1}$ ou $c_{i-1} > c_i$ (n entier variant de k à k + m),

c/

- les moyens de traitement de spectre opèrent sur des valeurs d'amplitude $c_n$ pour des fréquence $f_n$, selon le procédé suivant :
- on calcule $f^2_b$ selon la formule :

$$f^2_b = \frac{\displaystyle\sum_{n=k}^{k+m} c_n \cdot f^2_m}{\displaystyle\sum_{n=k}^{k+m} c_n}$$

- la valeur "h" est déterminée par la valeur fb racine carrée de la quantité précédente, (n entier variant de k à k+m),

d/

- les moyens de traitement de spectre opèrent sur des valeurs d'amplitude $c_n$ pour des fréquences $f_n$ pour déterminer la valeur "i" telle que ci soit la plus grande des composantes et la fréquence "fb" donnant "h" étant alors fb=fi (n entier variant de k à k+m).

## Claims

1. Radar device for measuring the distance "h" separating it from a surface, which device includes emission means (5) for emitting towards the said surface a frequency-modulated wave produced by an oscillator (14) equipped with a frequency control, the said emitted wave E(t) being frequency-modulated over a frequency range $\Delta F$ so that

$$E(t) = A\cos[2\pi(f_0 + \frac{\Delta F}{T} \cdot t)\cdot t],$$

reception means (7) for receiving this wave reflected by the said surface, a mixer circuit (10) for providing a beat wave from the emitted wave and received wave, and a processing circuit (20) including a circuit (25) for digitizing the beat wave, a time/frequency transformation operator (27) for providing frequency components from which the distance "h" is established, an autocorrelation operator (31) for performing an autocorrelation of the beat wave before applying it to the time/frequency transformation means (27), characterized in that the processing circuit also includes spectrum processing means (32) for determining the frequency fb giving the distance "h" from the values of a plurality of frequency components of the spectrum obtained by the time/frequency transformation operator (27), where

$$fb = \tau \frac{\Delta F}{T} ,$$

$\tau$ representing the delay between the emitted wave and the reflected wave, and in that these processing means operate in at least one of the following ways:

a) the spectrum processing means determine the frequency "fb" which provides the distance "h":

$$fb = \frac{\sum\limits_{n=k}^{k+m} c_n \cdot f_n}{\sum\limits_{n=k}^{k+m} c_n}$$

where $c_n$ are the amplitude values of the spectrum provided by the time/frequency transformation operator and $f_n$ are the frequency values relating to these amplitudes (n an integer varying from k to k + m),

b) the spectrum processing means operate on the amplitude values $c_n$ for frequencies $f_n$ according to the following procedure:

- the value "i" which gives the maximum absolute value of $c_n - c_{n-1}$ is determined, that is to say: $c_i - c_{i-1}$
- that one of the components $c_i$ or $c_{i-1}$ having the higher amplitude is determined, from which the frequency fb:
  $fb = f_i$ or $f_{i-1}$ according as $c_i > c_{i-1}$ or $c_{i-1} > c_i$ (n an integer varying from k to k+m).

c) the spectrum processing means operate on amplitude values $c_n$ for frequencies $f_n$ according to the following procedure:

- $f^2_b$ is computed through the formula:

$$f^2_b = \frac{\sum\limits_{n=k}^{k+m} c_n \cdot f^2_m}{\sum\limits_{n=k}^{k+m} c_n}$$

- the value "h" is determined by the value fb, the square root of the above quantity (n an integer varying from k to k+m),

d) the spectrum processing means operate on amplitude values $c_n$ for frequencies $f_n$ in order to determine the value "i" such that $c_i$ is the largest of the components and the frequency "fb" giving "h" then being $fb = f_i$ (n an integer varying from k to k+m).

## Patentansprüche

1. Radarvorrichtung, um die Entfernung "h" von einer Oberfläche zu messen, mit Sendemitteln (5) zum Aussenden einer von einem in seiner Frequenz steuerbaren Oszillator (14) erzeugten frequenzmodulierten Welle, wobei die ausgesendete Welle E(t) in einem Frequenzbereich $\Delta F$ frequenzmoduliert wird, so daß gilt

$$E(t) = A\cos[2\pi(f_0 + \frac{\Delta F}{T} t)t]$$

mit Empfangsmitteln (7) zum Empfang der von der Oberfläche reflektierten Welle, mit einem Mischkreis (10), um eine Überlagerungswelle zwischen der ausgesendeten und der empfangenen Welle zu liefern, und mit einem Verarbeitungskreis (20), der eine Schaltung (25) zur Digitalisierung der Überlagerungswelle, einen Zeit-Frequenz-Transformationsoperator (27) zur Lieferung der Frequenzkomponenten, aus denen die Entfernung "h" abgeleitet wird, und einen Autokorrelationsoperator (31) aufweist, um eine Autokorrelation der Überlagerungswelle durchzuführen, ehe sie an die Zeit-Frequenz-Transformationsmittel (27) angelegt wird, dadurch gekennzeichnet, daß der Verarbeitungskreis weiter Mittel (32) zur Verarbeitung des Spektrums besitzt, um die Frequenz fb, die die Entfernung "h" ergibt, ausgehend von den Werten einer Mehrzahl von Frequenzkomponenten des im Zeit-Frequenz-Transformationsoperator (27) erhaltenen Spektrums zu bestimmen, wobei gilt $fb = \tau.\Delta F/T$ und $\tau$ die Verzögerung zwischen der ausgesendeten und der empfangenen Welle darstellt, und daß diese Verarbeitungsmittel nach mindestens einer der folgenden Weisen vorgehen:

a) Die Mittel zur Verarbeitung des Spektrums bestimmen die die Entfernung "h" liefernde Frequenz fb:

$$fb = \frac{\sum\limits_{n=k}^{k+m} c_n \cdot f_n}{\sum\limits_{n=k}^{k+m} c_n}$$

wobei $c_n$ die Amplitudenwerte des vom Zeit-Frequenztransformationsoperator gelieferten Spektrums und $f_n$ die jeweiligen Frequenzwerte bei diesen Amplituden sind (n ist eine ganze Zahl, die von k bis k+m variiert),

b) Die Mittel zur Verarbeitung des Spektrums verarbeiten die Amplitudenwerte $c_n$ für Frequenzen $f_n$ gemäß folgendem Verfahren:

. man bestimmt den Wert i, der den größten Absolutwert für $c_n - c_{n-1}$ ergibt, d.h. $c_i - c_{i-1}$;
. man bestimmt diejenige der Komponenten $c_i$ oder $c_{i-1}$, die die größere Amplitude besitzt, und daraus die Frequenz fb: $fb = f_i$ oder $f_{i-1}$, je nachdem, ob gilt $c_i > c_{i-}$ oder $c_{i-1} > c_i$ (wobei n eine ganze Zahl ist, die von k bis k+m variiert);

c) die Mittel zur Verarbeitung des Spektrums verarbeiten Amplitudenwerte $c_n$ für Frequenzen $f_n$ gemäß folgendem Verfahren:

. man berechnet $f^2_b$ gemäß folgender Formel:

$$f^2_b = \frac{\sum\limits_{n=k}^{k+m} c_n \cdot f^2_m}{\sum\limits_{n=k}^{k+m} c_n}$$

. man bestimmt den Wert "h" für den Wert fb, der sich aus der Quadratwurzel der obigen Größe ergibt (n ist eine ganze Zahl, die von k bis k+m variiert),

d) die Mittel zur Verarbeitung des Spektrums verarbeiten Amplitudenwerte $c_n$ für Frequenzen $f_n$, um den Wert i zu bestimmen, derart, daß $c_i$ die größte Komponente ist, worauf sich dann die Frequenz fb, aus der die Entfernung "h" abgeleitet wird, ergibt: $fb = f_i$ (n ist eine ganze Zahl, die von k bis k+m variiert).

# FIG.1

# FIG. 2

FIG. 3